# EUROPEAN PATENT SPECIFICATION

(11) **EP 4 543 664 B1**
(45) Date of publication and mention of the grant of the patent: **28.01.2026**
(21) Application number: 23733748.0
(22) Date of filing: 19.06.2023
(51) Int. Cl.: B29C 64/118, B29C 64/188, B33Y 10/00, B33Y 40/20, B33Y 80/00, B29C 71/00, B29C 64/30

(54) **A METHOD FOR APPLYING A 2D PATTERN ONTO A 3D OBJECT AND CORRESPONDING 3D OBJECT**
VERFAHREN ZUM AUFBRINGEN EINES 2D-MUSTERS AUF EIN 3D-OBJEKT UND EIN ENTSPRECHENDES 3D-OBJEKT
PROCÉDÉ PERMETTANT D'APPLIQUER UN MOTIF 2D SUR UN OBJET 3D ET OBJET 3D CORRESPONDANT

(30) Priority: 23.06.2022 EP 22180598
(43) Date of publication of application: 30.04.2025
(73) Proprietor: Signify Holding B.V., 5656 AE Eindhoven (NL)
(72) Inventor: VAN BOMMEL, Ties, 5656 AE Eindhoven (NL); HIKMET, Rifat, Ata, Mustafa, 5656 AE Eindhoven (NL); VAN OS, Jacobus, Petrus, Johannes, 5656 AE Eindhoven (NL)
(74) Representative: Verweij, Petronella Daniëlle
(86) International application number: PCT/EP2023/066444
(87) International publication number: WO 2023/247432

(56) References cited:
- WO-A1-2021/175780
- WO-A1-2022/017821
- US-A1- 2020 114 572

## Description

### TECHNICAL FIELD

The present invention relates to a method for applying a 2D pattern onto a 3D printed item. The invention also relates to the 3D printed item obtainable by such method. Further, the invention relates to a lighting device including such a 3D printed item.

### BACKGROUND

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals, and polymers.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, e.g. for thermoplastics, the filament is melted and extruded before being laid down. In general, FDM printers use a thermoplastic filament, which is heated to its melting point and then extruded, layer by layer, or in fact filament after filament to create a three-dimensional object. FDM printers are relatively fast, low cost and can be used for printing complicated 3D objects. Such printers are used in printing various shapes using various polymers. The technique is also being further developed in the production of LED luminaires and lighting solutions.

Sometimes it may be desired to provide 2D printed patterns on 3D printed objects for decorative or informational purposes.

However, many plastic materials used as 3D printable materials for FDM have chemically inert and nonporous surfaces with low surface tensions causing them to be non-receptive to bonding with printing inks, coatings, and adhesives.

Therefore, there is a need to provide a method for applying a 2D pattern onto a 3D object in an efficient way.

US 2020/114572 A1 discloses an optical component comprising a plurality of layers, each layer comprising a core portion and a shell portion enveloping the core portion, wherein the core portion is made of a first material and the shell portion is made of a second material, the first material and the second material having a different transmissivity.

### SUMMARY

Considering the above, the present invention provides such a method according to independent claim 1.

The term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printed material may be printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Normally, the 3D printable material, the extrudate and 3D printed material are the same material, as the material upstream of the printer head, downstream of the printer head, and when deposited, is substantially the same material.

Herein, the term "3D printable material" may also be indicated as "printable material". The term "polymeric material" may refer to a blend of different polymers but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

The first 3D printable material may comprise a first thermoplastic polymer and the second 3D printable material may comprise a second thermoplastic polymer being the same as the first thermoplastic polymer. Such an embodiment offers the advantage of simplified and thus cost-efficient manufacturing, wherein both the first and the second 3D printable materials comprise the same polymer matrix, and wherein the second 3D printable material may be modified such that the second polarity and/or the second porosity of the second 3D printable material is different from the first polarity and/or the first porosity of the first 3D printable material. In particular, the first and/or the second thermoplastic polymer may be polyethylene (PE) or polypropylene (PP).

Alternatively, the second thermoplastic polymer may be different from the first thermoplastic polymer. In such an embodiment the second polarity and/or the second porosity of the second thermoplastic polymer is different from the first polarity and/or the first porosity of the first thermoplastic polymer.

The first thermoplastic material may be a single material or may be a combination of two or more materials. Analogously, the second thermoplastic material may be a single material or may be a combination of two or more materials. If a combination of at least two materials is used, all the materials constituting the second thermoplastic material should have polarity and/or porosity being different from the polarity and/or porosity of the first thermoplastic material.

The 3D printable material may include additives, to a volume percentage of at maximum about 60 vol.%, especially at maximum about 30 vol.%, such as at maximum 20 vol.% of the additives relative to the total volume of the thermoplastic material and additives.

The at least one additive may be selected from a group consisting of antioxidants, heat stabilizers, light stabilizers, ultraviolet light stabilizers, ultraviolet light absorbing additives, near infrared light absorbing additives, infrared light absorbing additives, plasticizers, lubricants, release agents, antistatic agents, anti-fog agents, antimicrobial agents, colorants, laser marking additives, surface effect additives, radiation stabilizers, flame retardants, and anti-drip agents. The additive may have useful properties selected from optical properties, electrical properties, thermal properties, and mechanical properties.

In general, the first and second thermoplastic materials have a glass transition temperature Tg and/or a melting temperature Tm. The glass transition temperature Tg and/or the melting temperature Tm of the first thermoplastic material may be same as or different from the glass transition temperature Tg and/or the melting temperature Tm of the second thermoplastic material. The 3D printable material will be heated by the 3D printer before it leaves the nozzle to a temperature of at least the glass transition temperature, and in general at least the melting temperature. Hence, the printer head action may comprise heating the 3D printable material above the glass transition, or above the melting temperature. It should be noted that melting occurs when the polymer chains fall out of their crystal structures and become a disordered liquid, while glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being higher than the former. The glass transition temperature and the melting point may e.g. be determined with differential scanning calorimetry.

As in evident from the above, the second 3D printable material is introduced in order to provide a surface portion, i.e. the second surface portion that has an increased affinity to the coating to be applied to the 3D item.

The 3D item manufactured according to the method of the present invention may be a core-shell item wherein the core may be formed by one of the first 3D printable material and the second 3D printable material and wherein the shell is formed by the other one of the first 3D printable material and the second 3D printable material. In such an embodiment, the shell is not printed in desired area such that the core forms the first surface portion of the exposed surface.

The coating may comprise or be an ink and/or an adhesive. Thus, the method of the present invention provides an improved transfer of a coating, e.g. a 2D image, onto the surface of the 3D item.

The ink and/or adhesive may comprise a colorant, such as a dye and/or pigment. The dye and/or pigment may have a color or reflectivity different from the color or reflectivity of the first surface portion. For example, the difference in reflectivity may be at least 30%, preferably at least 40%, more preferably at least 50%.

In a particular embodiment, the coating may not be applied on the first surface portion of the exposed surface of the layer stack.

The first polarity may correspond to or is hydrophilic and the second polarity may correspond to or is hydrophobic. Alternatively, the first polarity may correspond to or is hydrophobic and the second polarity may correspond to or is hydrophilic.

The first polarity may be a (relatively) high polarity and the second polarity may be a (relatively) low polarity. The material having low polarity may be referred to as non-polar. Alternatively, the first polarity may be a (relatively) low polarity e.g. nonpolar and the second polarity may be a (relatively) high polarity. Normally, the second polarity is greater than the first polarity.

The coating has the same or a comparable polarity as the second polarity. In case the second polarity is (relatively) high, the polarity of the coating may also be (relatively) high. For example, if the second polarity corresponds to or is hydrophilic, the coating may also be hydrophilic. In case the second polarity is (relatively) low, the polarity of the coating may also be relatively low. For example, if the second polarity corresponds or is hydrophobic, the coating may also be hydrophobic.

The second porosity may be greater than the first porosity. To this end, the second 3D printable material may comprise a modifying thermoplastic material, e.g. polymethyl methacrylate (PMMA). The modifying thermoplastic material may be in the form of particles being dispersed in a polymer matrix. Such an embodiment offers the advantage of improving adherence of the coating to the second surface portion compared to the first surface portion. Porosity (or void fraction) is a measure of the void (i.e. "empty") spaces in a material, and is a fraction of the volume of voids over the total volume, between 0 and 1, or as a percentage between 0% and 100%. Especially, the "accessible void" i.e. the total amount of void space accessible from the surface may be used as definition. The difference between the first and second porosity may be at least 30%, preferably at least 40%, more preferably at least 50%.

The second surface portion of the exposed surface of the layer stack may form a pattern. The pattern may match the pattern to be printed on the 3D item, such as a picture, a pictogram, or a text.

Alternatively, or additionally, the second 3D printable material may comprise filler particles. The filler particles may be selected from the group comprising wood particles, paper particles, metal particles, ceramic particles, glass particles and combinations thereof. In particular, the filler particles may be porous glass particles. Further, the filler particles may be reflective particles, such as high aspect ratio reflective flakes. Such an embodiment provides a second surface portion having a high specular reflectivity. Concentration of filler particles in the second 3D printable material may be less than 0.1 wt%.

Each of the filler particles may have a minimum bounding box having a length Lp, a width Wp and a height Hp. By the term "minimum bonding box" is understood a box having the smallest volume within which the particle fits. In particular, the ratio between Lp and Hp may be greater than 5, Lp/Hp>5. In such an embodiment, the filler particles are in the form of flakes and needles. Further, the ratio between Wp and Hp may be greater than 5, Wp/Hp>5. In such an embodiment, the filler particles are in the form of needles, thus improving coating affinity of the second surface portion.

The first surface portion of the 3D item may have visual and/or tactile properties being different from the properties of the second surface portion of the 3D item. In particular, the visual and/or tactile properties of the second surface portion of the 3D item are different from the visual and/or tactile properties of the first surface portion of the 3D item prior to step b), i.e. prior to applying of the coating. Such an embodiment offers the advantage of indicating wherein the coating will be positioned, such that the user may verify the correctness of the pattern to be provided on the 3D item before the coating is applied.

The method according the present invention may further comprise step c) of applying a protective layer on second surface portion of the exposed surface of the layer stack of the 3D item. Such a protective layer may be a clear transparent layer. The protective layer may be used in order to fix the coating present on the second surface portion. The protective layer may preferably have a thickness being below 0.5·Lp of the filler particle. If present, step c) occurs after step b), such the protective layer is applied after the coating, thus protecting the printed image.

It should be noted that steps a), b) and c) are performed in a subsequent manner, i.e. step a) is performed before step b), and step b) is performed before step c). The method of the present invention may comprise further steps, e.g. cooling, curing, washing, drying or the like. These additional steps may be performed between steps a), b) and/or c).

It is further conceivable that steps a) and b) partially overlap. In other words, step a) may still be ongoing when step b) is started.

The first surface portion of the exposed surface of the layer stack may have a first area R1, and the second surface portion of the exposed surface of the layer stack may have a second area R2, wherein the first area may be greater than the second area. In particular, the ratio between the second area R2 and the first area R1 may be from 0.01 to 0.5, preferably from 0.03 to 0.3, more preferably from 0.05 to 0.1.

The 3D printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform. Instead of the term "receiver item" also the term "substrate" may be used. Therefore, the phrase "printing on a substrate" and similar phrases include amongst others directly printing on the substrate, or printing on a coating on the substrate or printing on 3D printed material earlier printed on the substrate.

Layer by layer printable material is deposited, by which the 3D printed item is generated during the printing stage. The 3D printed item may show a characteristic ribbed structure originating from the deposited filaments. However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, cross-linking, etc. Post-processing may include smoothening the ribbed structures, which may lead to an essentially smooth surface. Post-processing may include cross-linking of the thermoplastic material. This may result in fewer or no thermoplastic properties of the material.

Further a 3D printable material for use in the method described above is disclosed. The 3D printable material comprises a first 3D printable material having a first polarity and a first porosity; and a second 3D printable material having a second polarity and a second porosity; the first polarity being different from the second polarity and/or the first porosity being different from the second porosity. The features of the first and the second 3D printable material are analogous to the description above.

Further, the present invention relates to a 3D item according to independent claim 10.

In order to have good adhesion between polar and nonpolar layers, core-shell type printing can be used. For example, polar polymer may be used in the core and nonpolar polymer may be used in the shell. Thus, in areas where only core is printed, the core becomes the exposed surface and it is polar. In areas where both core and shell are printed, the shell becomes the exposed surface and the surface is nonpolar.

The second surface portion of the exposed surface of the layer stack may form a pattern, in analogy with the above.

The second surface portion of the exposed surface of the layer stack comprises a coating, e.g. an ink. The 3D item of the present invention may be manufactured by the method described above.

The 3D printed item comprises a plurality of layers on top of each other, i.e. stacked layers. The width W_{L} and height H_{L} of individually 3D printed layers may e.g. in embodiments be selected from the range of 100 - 5000 µm, such as 200-2500 µm, with the height in general being smaller than the width. For instance, the ratio of height and width may be equal to or smaller than 0.8, such as equal to or smaller than 0.6. It should be noted that the layer width W_{L} and/or layer height H_{L} of each layer may be same as or different from the layer width W_{L} and/or layer height H_{L} of the other layers. The 3D printed item may comprise at least 5 layers, like at least 8 layers, such as at least 10 layers.

Finally, the present invention provides a lighting device comprising a 3D item as described above. The 3D item may be configured as one or more of (i) at least part of a lighting device housing, (ii) at least part of a wall of a lighting chamber, and (iii) an optical element. The optical element may be a lens, a collimator, or a reflector.

### BRIEF DESCRIPTION OF THE DRAWINGS

Embodiments of the invention will now be described, by way of example only, with reference to the accompanying schematic drawings in which corresponding reference symbols indicate corresponding parts, and in which:

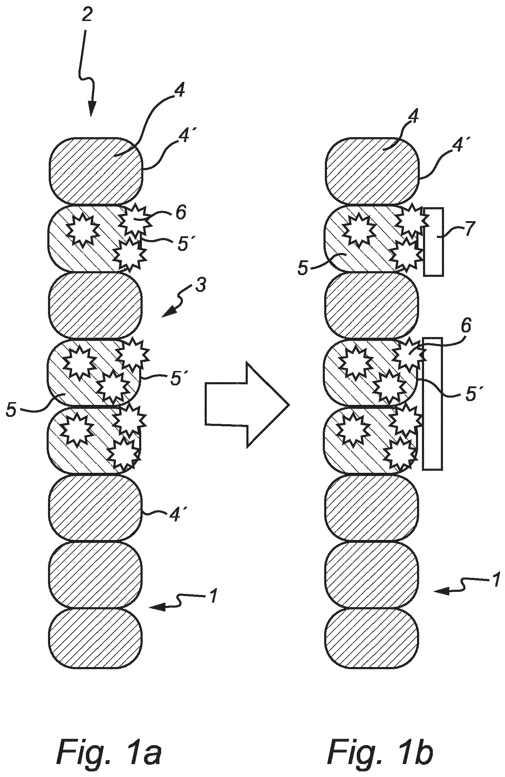

Fig. 1a depicts a portion of a 3D item not according to the present invention; filament not according to the present invention;
Fig. 1b illustrates the portion of the 3D item in Fig. 1a provided with a 2D image.

All the figures are schematic, not necessarily to scale, and generally only show parts which are necessary in order to elucidate embodiments of the present invention, wherein other parts may be omitted or merely suggested.

### DETAILED DESCRIPTION OF THE INVENTION

The present invention will now be described hereinafter with reference to the accompanying drawings, in which exemplifying embodiments of the present invention are shown. In the drawings, identical reference numerals denote the same or similar components having a same or similar function, unless specifically stated otherwise.

Fig. 1a shows a 3D item 1 comprising a layer stack 2 having an exposed surface 3. The 3D printed item 1 depicted in Fig. 1a comprises 8 layers.

The layer stack 2 comprises a first 3D printed material 4 having a first polarity and a first porosity, and a second 3D printed material 5 having a second polarity and a second porosity; the first polarity being different from the second polarity and/or the first porosity being different from the second porosity. The first 3D printed material 4 forms a first surface portion 4' of the exposed surface 3 of the layer stack 2, and the second 3D printed material 5 forms a second surface portion 5' of the exposed surface 3 of the layer stack 2.

As mentioned above, the second surface portion 5' of the exposed surface 3 of the layer stack 2 may form a pattern.

The second 3D printed material 5 comprises filler particles 6. The filler particles 6 may be selected from the group comprising wood particles, paper particles, metal particles, ceramic particles, glass particles and combinations thereof. In particular, the filler particles may be porous glass particles. Further, the filler particles 6 may be reflective particles, such as high aspect ratio reflective flakes. Such an embodiment provides a second surface portion 5' having a high specular reflectivity. Concentration of filler particles 6 in the second 3D printed material 5 may be less than 0.1 wt%.

Each of the filler particles 6 may have a minimum bounding box having a length Lp, a width Wp and a height Hp. By the term "minimum bonding box" is understood a box having the smallest volume within which the particle fits. In particular, the ratio between Lp and Hp may be greater than 5, Lp/Hp>5. In such an embodiment, the filler particles 6 are in the form of flakes and needles. Further, the ratio between Wp and Hp may be greater than 5, Wp/Hp>5. In such an embodiment, the filler particles 6 are in the form of needles, thus improving coating affinity of the second surface portion 5'.

As may be seen in Fig. 1a, the first surface portion 4' of the 3D item 1 has visual and/or tactile properties being different from the properties of the second surface portion 5' of the 3D item 1. In particular, the visual and/or tactile properties of the second surface portion 5' of the 3D item 1 are different from the visual and/or tactile properties of the first surface portion 4' of the 3D item 1 prior to step b), i.e. prior to applying of the coating 7. Such an embodiment not forming part of the claimed invention offers the advantage of indicating wherein the coating 7 will be positioned, such that the user may verify the correctness of the pattern to be provided on the 3D item 1 before the coating 7 is applied.

As may be seen in Fig. 1b, the second surface portion 5' of the exposed surface 3 of the layer stack 2 comprises a coating 7, e.g. an ink.

The first surface portion 4' of the exposed surface 3 of the layer stack 2 may have a first area R1, and the second surface portion 5' of the exposed surface 3 of the layer stack 2 may have a second area R2, wherein the first area may be greater than the second area. In particular, the ratio between the second area R2 and the first area R1 may be from 0.01 to 0.5, preferably from 0.03 to 0.3, more preferably from 0.05 to 0.1.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method for producing a 3D item (1) by means of fused deposition modelling, the method comprising the step of:
a) layer-wise depositing a first 3D printable material (4) and a second 3D printable material (5) to provide the 3D item (1) comprising a layer stack (2) having an exposed surface (3),
wherein the first 3D printable material (4) has a first polarity;
wherein the second 3D printable material (5) has a second polarity;
one of the first polarity and the second polarity corresponding to or being hydrophilic and the other of the first polarity and the second polarity corresponding to or being hydrophobic;
wherein the first 3D printable material (4) forms a first surface portion (4') of the exposed surface (3) of the layer stack (2), and the second 3D printable material (5) forms a second surface portion (5') of the exposed surface (3) of the layer stack (2);
wherein the method further comprises the step of:
b) applying a coating (7) on the second surface portion (5') of the exposed surface (3) of the layer stack (2), and
wherein the coating (7) has the same or a comparable polarity as the second polarity.

2. The method according to claim 1, wherein the coating (7) comprises an ink and/or an adhesive.

3. The method according to any one of the preceding claims, wherein the second surface portion (5') of the exposed surface (3) of the layer stack (2) forms a pattern.

4. The method according to any one of the preceding claims, wherein the second 3D printable material (5) comprises filler particles.

5. The method according to any one of the preceding claims, wherein the first 3D printable material (4) comprises a first thermoplastic polymer and the second 3D printable material (5) comprises a second thermoplastic polymer being the same as the first thermoplastic polymer.

6. The method according to any one of the preceding claims, wherein the first surface portion (4') of the 3D item (1) has visual and/or tactile properties being different from the properties of the second surface portion (5') of the 3D item (1).

7. The method according to any one of the preceding claims, the method further comprising step c) of applying a protective layer on at least the second surface portion (5') of the exposed surface (3) of the layer stack (2).

8. The method according to any one of the preceding claims, wherein the first surface portion (4') of the exposed surface (3) of the layer stack (2) has a first area R1, and the second surface portion (5') of the exposed surface (3) of the layer stack (2) has a second area R2, wherein the first area is greater than the second area.

9. The method according to claim 8, wherein the ratio between the second area R2 and the first area R1 is from 0.01 to 0.5, preferably from 0.03 to 0.3, more preferably from 0.05 to 0.1.

10. A 3D item (1) comprising a layer stack (2) having an exposed surface (3), wherein the layer stack (2) comprises a first 3D printed material (4) having a first polarity, and a second 3D printed material (5) having a second polarity;
one of the first polarity and the second polarity corresponding to or being hydrophilic and the other of the first polarity and the second polarity corresponding to or being hydrophobic;
wherein the first 3D printed material (4) forms a first surface portion (4') of the exposed surface (3) of the layer stack (2), and the second 3D printed material (5) forms a second surface portion (5') of the exposed surface (3) of the layer stack (2),
wherein the second surface portion (5') of the exposed surface (3) of the layer stack (2) comprises a coating (7), and
wherein the coating (7) has the same or a comparable polarity as the second polarity.

11. The 3D item (1) according to claim 10, wherein the second surface portion (5') of the exposed surface (3) of the layer stack (2) forms a pattern.

12. A lighting device comprising the 3D item (1) according to any one of claims 10 and 11, wherein the 3D item (1) is configured as one or more of (i) at least part of a lighting device housing, (ii) at least part of a wall of a lighting chamber, and (iii) an optical element.

## Patentansprüche

1. Verfahren zum Herstellen eines 3D-Artikels (1) mittels Schmelzschichtung, das Verfahren umfassend die Schritte:
a) schichtweises Abscheiden eines ersten 3D-druckbaren Materials (4) und eines zweiten 3D-druckbaren Materials (5), um den 3D-Artikel (1) bereitzustellen, der einen Schichtstapel (2) mit einer freiliegenden Oberfläche (3) umfasst,
wobei das erste 3D-druckbare Material (4) eine erste Polarität aufweist;
wobei das zweite 3D-druckbare Material (5) eine zweite Polarität aufweist;
wobei eine der ersten Polarität und der zweiten Polarität hydrophil oder entsprechend ist, und die andere der ersten Polarität und der zweiten Polarität hydrophob oder entsprechend ist;
wobei das erste 3D-druckbare Material (4) einen ersten Oberflächenabschnitt (4') der freiliegenden Oberfläche (3) des Schichtstapels (2) bildet, und das zweite 3D-druckbare Material (5) einen zweiten Oberflächenabschnitt (5') der freiliegenden Oberfläche (3) des Schichtstapels (2) bildet;
wobei das Verfahren ferner die Schritte umfasst:
b) Aufbringen einer Beschichtung (7) auf dem zweiten Oberflächenabschnitt (5') der freiliegenden Oberfläche (3) des Schichtstapels (2), und
wobei die Beschichtung (7) die gleiche oder eine vergleichbare Polarität wie die zweite Polarität aufweist.

2. Verfahren nach Anspruch 1, wobei die Beschichtung (7) eine Tinte und/oder einen Klebstoff umfasst.

3. Verfahren nach einem der vorstehenden Ansprüche, wobei der zweite Oberflächenabschnitt (5') der freiliegenden Oberfläche (3) des Schichtstapels (2) ein Muster bildet.

4. Verfahren nach einem der vorstehenden Ansprüche, wobei das zweite 3D-druckbare Material (5) einen Füllstoffpartikel umfasst.

5. Verfahren nach einem der vorstehenden Ansprüche, wobei das erste 3D-druckbare Material (4) ein erstes thermoplastisches Polymer umfasst und das zweite 3D-druckbare Material (5) ein zweites thermoplastisches Polymer umfasst, welches dasselbe wie das erste thermoplastische Polymer ist.

6. Verfahren nach einem der vorstehenden Ansprüche, wobei der erste Oberflächenabschnitt (4') des 3D-Artikels (1) visuelle und/oder taktile Merkmale aufweist, die sich von den Eigenschaften des zweiten Oberflächenabschnitts (5') des 3D-Artikels (1) unterscheiden.

7. Verfahren nach einem der vorstehenden Ansprüche, wobei das Verfahren ferner Schritt c) des Aufbringens einer Schutzschicht auf mindestens den zweiten Oberflächenabschnitt (5') der freiliegenden Oberfläche (3) des Schichtstapels (2) umfasst.

8. Verfahren nach einem der vorstehenden Ansprüche, wobei der erste Oberflächenabschnitt (4') der freiliegenden Oberfläche (3) des Schichtstapels (2) eine erste Fläche R1 aufweist, und der zweite Oberflächenabschnitt (5') der freiliegenden Oberfläche (3) des Schichtstapels (2) eine zweite Fläche R2 aufweist, wobei die erste Fläche größer ist als die zweite Fläche.

9. Verfahren nach Anspruch 8, wobei das Verhältnis zwischen der zweiten Fläche R2 und der ersten Fläche R1 von 0,01 bis 0,5 beträgt, vorzugsweise von 0,03 bis 0,3, mehr bevorzugt von 0,05 bis 0,1.

10. 3D-Artikel (1), umfassend einen Schichtstapel (2) mit einer freiliegenden Oberfläche (3), wobei der Schichtstapel (2) ein erstes 3D-gedrucktes Material (4) mit einer ersten Polarität und ein zweites 3D-gedrucktes Material (5) mit einer zweiten Polarität umfasst;
wobei eine der ersten Polarität und der zweiten Polarität hydrophil oder entsprechend ist, und die andere der ersten Polarität und der zweiten Polarität hydrophob oder entsprechend ist;
wobei das erste 3D-gedruckte Material (4) einen ersten Oberflächenabschnitt (4') der freiliegenden Oberfläche (3) des Schichtstapels (2) bildet, und das zweite 3D-gedruckte Material (5) einen zweiten Oberflächenabschnitt (5') der freiliegenden Oberfläche (3) des Schichtstapels (2) bildet,
wobei der zweite Oberflächenabschnitt (5') der freiliegenden Oberfläche (3) des Schichtstapels (2) eine Beschichtung (7) umfasst, und
wobei die Beschichtung (7) die gleiche oder eine vergleichbare Polarität wie die zweite Polarität aufweist.

11. 3D-Gegenstand (1) nach Anspruch 10, wobei der zweite Oberflächenabschnitt (5') der freiliegenden Oberfläche (3) des Schichtstapels (2) ein Muster bildet.

12. Beleuchtungsvorrichtung, umfassend den 3D-Artikel (1) nach einem der Ansprüche 10 bis 11, wobei der 3D-Artikel (1) als eines oder mehrere von (i) mindestens einem Teil eines Beleuchtungsvorrichtungsgehäuses, (ii) mindestens einem Teil einer Wand einer Beleuchtungskammer und (iii) einem optischen Element konfiguriert ist.

## Revendications

1. Procédé permettant de produire un article en 3D (1) au moyen d'une modélisation par dépôt en fusion, le procédé comprenant l'étape consistant à :
a) déposer par couches un premier matériau imprimable en 3D (4) et un second matériau imprimable en 3D (5) pour obtenir l'article en 3D (1) comprenant un empilement de couches (2) ayant une surface exposée (3),
dans lequel le premier matériau imprimable en 3D (4) a une première polarité ;
dans lequel le second matériau imprimable en 3D (5) a une seconde polarité ;
l'une de la première polarité et de la seconde polarité correspondant à un caractère hydrophile ou étant hydrophile et l'autre de la première polarité et de la seconde polarité correspondant à un caractère hydrophobe ou étant hydrophobe ;
dans lequel le premier matériau imprimable en 3D (4) forme une première partie de surface (4') de la surface exposée (3) de l'empilement de couches (2), et le second matériau imprimable en 3D (5) forme une seconde partie de surface (5') de la surface exposée (3) de l'empilement de couches (2) ;
dans lequel le procédé comprend en outre l'étape consistant à :
b) appliquer un revêtement (7) sur la seconde partie de surface (5') de la surface exposée (3) de l'empilement de couches (2), et
dans lequel le revêtement (7) a la même polarité ou une polarité comparable à la seconde polarité.

2. Procédé selon la revendication 1, dans lequel le revêtement (7) comprend une encre et/ou un adhésif.

3. Procédé selon l'une quelconque des revendications précédentes, dans lequel la seconde partie de surface (5') de la surface exposée (3) de l'empilement de couches (2) forme un motif.

4. Procédé selon l'une quelconque des revendications précédentes, dans lequel le second matériau imprimable en 3D (5) comprend des particules de charge.

5. Procédé selon l'une quelconque des revendications précédentes, dans lequel le premier matériau imprimable en 3D (4) comprend un premier polymère thermoplastique et le second matériau imprimable en 3D (5) comprend un second polymère thermoplastique identique au premier polymère thermoplastique.

6. Procédé selon l'une quelconque des revendications précédentes, dans lequel la première partie de surface (4') de l'article en 3D (1) a des propriétés visuelles et/ou tactiles différentes des propriétés de la seconde partie de surface (5') de l'article en 3D (1).

7. Procédé selon l'une quelconque des revendications précédentes, le procédé comprenant en outre l'étape c) consistant à appliquer une couche protectrice sur au moins la seconde partie de surface (5') de la surface exposée (3) de l'empilement de couches (2).

8. Procédé selon l'une quelconque des revendications précédentes, dans lequel la première partie de surface (4') de la surface exposée (3) de l'empilement de couches (2) a une première zone R1, et la seconde partie de surface (5') de la surface exposée (3) de l'empilement de couches (2) a une seconde zone R2, dans lequel la première zone est plus grande que la seconde zone.

9. Procédé selon la revendication 8, dans lequel le rapport entre la seconde zone R2 et la première zone R1 est de 0,01 à 0,5, de préférence de 0,03 à 0,3, plus préférablement de 0,05 à 0,1.

10. Article en 3D (1) comprenant un empilement de couches (2) ayant une surface exposée (3), dans lequel l'empilement de couches (2) comprend un premier matériau imprimé en 3D (4) ayant une première polarité, et un second matériau imprimé en 3D (5) ayant une seconde polarité ;
l'une de la première polarité et de la seconde polarité correspondant à un caractère hydrophile ou étant hydrophile et l'autre de la première polarité et de la seconde polarité correspondant à un caractère hydrophobe ou étant hydrophobe ;
dans lequel le premier matériau imprimé en 3D (4) forme une première partie de surface (4') de la surface exposée (3) de l'empilement de couches (2), et le second matériau imprimé en 3D (5) forme une seconde partie de surface (5') de la surface exposée (3) de l'empilement de couches (2),
dans lequel la seconde partie de surface (5') de la surface exposée (3) de l'empilement de couches (2) comprend un revêtement (7), et
dans lequel le revêtement (7) a la même polarité ou une polarité comparable à la seconde polarité.

11. Article en 3D (1) selon la revendication 10, dans lequel la seconde partie de surface (5') de la surface exposée (3) de l'empilement de couches (2) forme un motif.

12. Dispositif d'éclairage comprenant l'article en 3D (1) selon l'une quelconque des revendications précédentes 10 à 11, dans lequel l'article en 3D (1) est conçu en tant qu'un ou plusieurs parmi (i) au moins une partie d'un boîtier de dispositif d'éclairage, (ii) au moins une partie d'une paroi d'une chambre d'éclairage, et (iii) un élément optique.
